# NEUE EUROPÄISCHE PATENTSCHRIFT

(11) **EP 2 585 360 B2**
(45) Veröffentlichungstag und Bekanntmachung des Hinweises auf die Entscheidung über den Einspruch: **04.09.2019**
(45) Hinweis auf die Patenterteilung: 01.06.2016
(21) Anmeldenummer: 11726358.2
(22) Anmeldetag: 18.06.2011
(51) Int. Cl.: B62D 55/20

(54) **KETTENLAUFWERK, INSBESONDERE FÜR MILITÄRISCHE FAHRZEUGE**
CRAWLER CHAIN TRAVELLING GEAR, IN PARTICULAR FOR MILITARY VEHICLES
TRAIN DE ROULEMENT À CHENILLE, EN PARTICULIER POUR VÉHICULES MILITAIRES

(30) Priorität: 23.06.2010 DE 102010024846
(43) Veröffentlichungstag der Anmeldung: 01.05.2013
(73) Patentinhaber: Rheinmetall Landsysteme GmbH, 29345 Unterlüß (DE)
(72) Erfinder: LUMKOWSKY, Frank, 24229 Dänischenhagen (DE); BAARS, Björn, 24103 Kiel (DE); RUSCH, Thomas, 24114 Kiel (DE); HINZ, Rolf-Joachim, 24159 Kiel (DE)
(74) Vertreter: Dietrich, Barbara
(86) Internationale Anmeldenummer: PCT/EP2011/003028
(87) Internationale Veröffentlichungsnummer: WO 2011/160800

(56) Entgegenhaltungen:
- FR-A1- 2 665 415
- FR-A1- 2 715 628
- JP-A- S6 189 182
- JP-A- 61 089 182
- US-A- 3 912 336
- Gary W. Cooke: "M1 Abrams Main Battle Tank", Inetres, 16 December 2006 (2006-12-16), pages 1-5, Retrieved from the Internet: URL:https://web.archive.org/web/2006121605 5258/http://www.inetres.com/gp/military/cv /tank/M1.html
- "M1 Abrams (T156) Track Shoe", ISO Group, 2017, pages 1-4, Retrieved from the Internet: URL:https://www.iso-group.com/sustainment/ military-land-vehicles/M1-Abrams/M1-Abrams -T156-Track-Shoe
- "105 mm Gun Tank M1 Abrams", AFVDB, 20 June 2007 (2007-06-20), pages 1-15, Retrieved from the Internet: URL:https://web.archive.org/web/2016082906 3654/http://afvdb.50megs.com/usa/pics/m1ab rams.html
- Ergebnis einer google-Bildersuche mit dem Begriff "m1 grizzly" nach vor dem 22.06.2010 veröffentlichten Bildern (gefunden 08.02.2017)
- Internet Archive WaybackMachine, www.archive.org, 30 January 2009 (2009-01-30), Retrieved from the Internet: URL:http://www.t-72de/html/body_fahrwerk.h tml [retrieved on 2017-02-22]
- Wikipedia-Artikel "Militärfahrzeug", de.wikipedia.org/wiki/Milit%C3&A4rfahrzeug (gefunden am 08.02.2017)
- Abzug des 1. Fotos der E3 in hoher Qualität
- Fotos 1,b und c eines M1 Abrams von 2003 mit jpeg Metadaten
- M1 Abrams während eines Manövers mit Foto
- Modelbausatz M1A1/A2 Abrams "5-in-1" von 2008
- Taschenbuch der Panzer, 7. Edition, 1990

## Beschreibung

Die Erfindung betrifft ein Kettenlaufwerk, insbesondere für militärische Fahrzeuge, mit einer Gleiskette, mit einem Antriebsrad, welches mindestens einen in die Gleiskette eingreifenden Zahnkranz umfasst, und mit einer an dem Zahnkranz befestigten Sicherungsscheibe zur Vermeidung eines Abwerfens der Kette bei Kurvenfahrten, etc.

Der Antrieb der Gleiskette erfolgt über das Antriebsrad und dessen Zahnkränze der die Kraft über die Endverbinder an die Gleiskette weitergibt (Kettenantrieb). Durch die im Feld vorherrschenden Bodenverhältnisse ist es möglich, dass Erdreich sich in den Mulden des Zahnkranzes anhäuft und durch die Kettenspannung verdichtet wird, sodass stetig der nächst eingreifende Endverbinder langsam aus der Mulde des Zahnkranzes abhebt (verdrängt wird). Dieses verdichten des Erdreiches kann bis zur vollständigen Muldenhöhe des Zahnkranzes erfolgen, so dass der Endverbinder keinen Formschluss mehr zum Zahnkranz hat und die Gleiskette über den Zahnkranz rutscht. Bei Kurvenfahrten ist es sogar möglich, dass die Gleiskette teilweise vom Antriebsrad herunterrutscht und eine Weiterfahrt nicht mehr gegeben ist.

Eine Antriebstrommel für Gleiskettenfahrzeuge beschreibt die DE 19 18 554 U1. Diese weist einen zwischen einem äußeren Antriebszahnkranz und einer Anlaufscheibe befindlichen Hohlraum auf. Um zu vermeiden, dass die Kette anspringt, wird ein selbsttätiges Entleeren des Hohlraumes dadurch erreicht, dass die Anlaufscheibe mit mehreren, diesen Hohlraum mit einem äußeren Hohlraum verbindenden Durchbrüchen zu versehen.

Ein anderer Gleiskettenschutz ist der JP 2005 -280638 A entnehmbar.

Derartige Kettenlaufwerke werden bzw. wurden beispielsweise bei dem gattungsgemäßen russischen Panzer T-72 verwendet (http://www t-72.de/html/body fahnrwerk.html). Dabei weist das jeweilige Kettenlaufwerk ein Antriebsrad mit zwei parallel zueinander angeordneten Zahnkränzen auf, wobei an dem der Außenseite des Panzere zugewandten Zahnkranzes innenseitig zusätzlich eine Sicherungsscheibe zur Vermeidung das Abwerfens der Kette angeordnet ist. Diese Sicherungsscheibe bewirkt im Wesentlichen eine seitliche Führung der auf der Innenseite der jeweiligen Gleiskette angeordneten Mittelführungszähne im Bereich des Antriebsrades.

Ein Austauschen der Sicherungsscheibe bei diesem bekannten Kettenlaufwerk, etwa zu Wartungszwecken, Ist relativ aufwendig, da zunächst der außenseitige Zahnkranz des jeweiligen Antriebsrades demontiert werden muss. Außerdem muss der maximale Durchmesser der bekannten Sicherungsscheibe derart gewählt werden, dass er unterhalb der Unterseite der jeweiligen Gleiskette liegt, damit die Bewegung der Gleiskette nicht durch die Sicherungsscheibe behindert wird, so dass ein Abwerfen der entsprechenden Gleiskette bei Wendemanövern nicht immer sichergestelit werde kann.

Die FR 2 665 415 A1 betrifft einen Schutz für ein Antriebs- und Führungsrad, um zu vermeiden, dass die Gummikette von diesen Rädern rutscht. Der Schutz ist beidseitig an den Rädern angebracht und wird durch einen Ring gebildet, der innen- und außenseitig an den Rädern eingebunden ist. Außenseitig ist der Schutz über ein Zwischenstück am Rad befestigt. Die klassische Gummikette Ist dabei mit seitlichen Erhöhungen ausgestattet in denen die Räder geführt werden. Der Schutz selbst ist kleiner als der maximale Außendurchmesser der Räder.

Die JP 61 89182 A offenbart einen Mechanismus, um das Ausrücken der Räder einer Laufkattenfahrvorrichtung aus der Schienenaleisspur (Gummikette) zu verhindern. Die Räder umfassen Zähne, die mit den Zähnen der Schienengleisspur kämmen. Die beiden Seitenflächen der Zähne der Schienengleise sind mit Schrägflächen ausgebildet. Beidseitig der Räder sind umlaufende Kragen angebracht und außen als auch innenseitig am Rad befestigt. Die Spitzen der Kragen der Räder liegen an den schlägen Flächen an und verhindern ein Ausrücken der Räder aus der Schienengleisspur, Der ringförmige Kragen bzw. die ringförmige Scheibe ist dabei größer als der maximale Außendurchmesser das Rades, da die Schienengleisspur ihrerseits Antriebszähne aufweist, die an den Untergrund angreifen.

Vorgenannte Gummiketten unterscheiden sich von einer Gleiskette dadurch, dass die Gummiketten keine einzelnen Kettenglieder aufweist, die über Endverbinder miteinander verbunden sind,

Ein gattungsgemäßes Kettenlaufwerk ist aus der US 3,912,336 bekannt.

Der Erfindung liegt die Aufgabe zugrunde, ein Ketteniaufwerk der eingangs erwähnten Art anzugeben, bei dem ein Abwerfen der Gleiskette auch bei Kurvenfahrten etc. des entsprechenden kettenfahrzeuges durch einfach zu wartende Mittel sicher vermieden wird.

Diese Aufgabe wird erfindungsgemäß durch die Merkmale des Anspruchs 1 gelöst. Weitere, besonders vorteilhafte Ausgestaltungen der Erfindung offenbaren die Unteransprüche.

Die Erfindung beruht im Wesentlichen auf dem Gedanken, dass das Kattenlaufwerk eine Sicherungsscheibe umfasst, die außenseitig an dem äußeren Zahnkranz des Antriebsrades befestigt Ist und einen maximalen Außendurchmesser aufweist, der mindestens dem maximalen Außendurchmesser des Zahnkranzes (in der Regel: Durchmesser, gemessen zwischen zwei gegenüberliegenden Zähnen) entspricht.

Bei dem lösungsgemäßen Kettenlaufwerk erfolgt durch die Sicherungsscheibe also keine Führung der Kettenführungszähne im Bereich zwischen den Zahnkränzen des jeweiligen Antriebsrades, sondern eine seitliche Führung des außenseitigen Randes der Gleiskette.

Eine derartige Sicherungsscheibe lässt sich auch ohne Demontage des außenseitigen Zahnkranzes auf einfache Weise etwa für Wartungszwecke lösen und gegebenenfalls durch eine neue Sicherungsscheibe ersetzen.

Außerdem kann der Durchmesser der Sicherungsscheibe so groß gewählt werden, dass ein Abwerfen der Kette mit Sicherheit vermeidbar ist.

Bei einer Ausführungsform der Erfindung weist die Sicherungsscheibe einen Außendurchmesser auf, der derart gewählt ist, dass der oberhalb des Zahnkranzes befindliche Abschnitt der Gleiskette seitlich völlig von der Sicherungsscheibe abgedeckt wird.

Um das Gewicht der Sicherungsscheibe möglichst gering zu halten, hat es sich als vorteilhaft erwiesen, wenn die Sicherungsscheibe ringförmig ausgebildet ist und/oder gleichmäßig über den Umfang verteilt angeordnete Langlöcher aufweist.

Die Sicherungsscheibe dient dazu, dass herunterrutschen der Gleiskette vom Antriebsrad zu verhindern. Dieses erfolgt durch eine Anlage der Endverbinder an der Sicherungsscheibe.

Da bei diesem Zustand die Mulde des Zahnkranzes vollständig mit Morast aufgehäuft ist, sind Öffnungen in der Sicherungsscheibe symmetrisch zu den Zahnkranzmulden des Zahnkranzes vorhanden, wodurch das Herausfallen des Morastes gewährleistet wird.

Da bei längerer Betriebsdauer des Fahrzeuges die Gummipolster verschleißen (Abrieb) und ein bestimmter Durchmesser (770-790 mm) der Sicherungsscheibe erforderlich ist, um die Funktion des Sicherns gegen herunterrutschen der Gleiskette zu gewährleisten, ist am Umfang der Sicherungsscheibe eine Verzahnung mit Vorsprünge und Ausnehmung erforderlich, um die Kletterfähigkeit des Fahrzeuges bei Rückwärtsfahrt trotz abgefahrener Gummipolster zu gewährleisten.

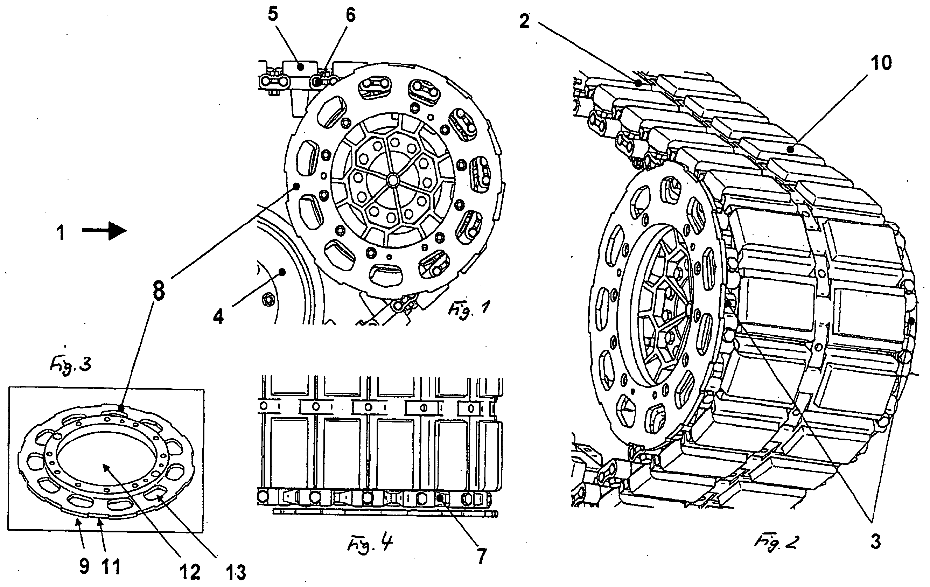

Weitere Einzelheiten und Vorteile der Erfindung ergeben sich aus dem folgenden, anhand mehrerer, sich ergänzender Fig. 1 bis 4 erläuterten Ausführungsbeispiel. Dabei ist in den Fig. 1, 2 der heckseitige Teil eines der beiden Laufwerke eines Kampfpanzers dargestellt.

Ein mit 1 bezeichnetes Kettenlaufwerk umfasst eine Gleiskette 2, ein Antriebsrad 3 sowie mehrere Laufräderpaare 4.

Die Gleiskette 2 besteht im dargestellten Fall aus einer Vielzahl von modularen Kettengliedern 5, die über Endverbinder 6 miteinander verbunden sind (sogenannte Verbinderkette).

Das Antriebsrad 3 umfasst zwei parallel zueinander angeordnete Zahnkränze, von denen in der Figur allerdings nur ein Teil des äußeren Zahnkranzes 7 erkennbar ist. Zur Bewegung der Gleiskette 2 greifen die Zähne (nicht dargestellt) der Zahnkränze des Antriebsrades 3 in die Endverbinder 6 ein.

Erfindungsgemäß ist nun vorgesehen, dass zur Vermeidung eines Abwerfens der Gleiskette 2 bei Kurvenfahrten etc. eine Sicherungsscheibe 8 außenseitig an dem äußeren Zahnkranz 7 des Antriebsrades 3 befestigt ist. Dabei ist der maximale Außendurchmesser der Sicherungsscheibe 8 derart gewählt, dass die Gleiskette 2 nicht über die Zähne des äußeren Zahnkranzes 7 des Antriebsrades 3 gelangen, d.h. nicht über diese abgeworfen werden können.

Wie den Figuren entnehmbar ist, wurde bei dem dargestellten Kettenlaufwerk 1 der Außendurchmesser der Sicherungsscheibe 8 derart gewählt, dass die Kettenglieder 5, die sich oberhalb des Zahnkranzes 7 befinden, seitlich fast vollständig von der Sicherungscheibe 8 abgedeckt werden. Dabei ist der äußere Umfang der Sicherungsscheibe 8 mäanderförmig ausgebildet, und zwar derart, dass die Vorsprünge 9 die seitlich benachbarten Gummipolster 10 der Kettenglieder 5 und die nutenförmigen Ausnehmungen 11 die Bereiche der Endverbinder 6 seitlich teilweise abdecken.

Um das Gewicht der Sicherungsscheibe 8 gering zu halten, ist diese als Ringscheibe mit einer zentralen Ausnehmung 12 ausgebildet und weist außerdem gleichmäßig über den Umfang verteilt angeordnete Langlöcher 13 auf.

Die Sicherungsscheibe 8 kann durch einfache Montage an den Zahnkranz 7 montiert werden. Die Verschraubung des Zahnkranzes 7 wird nicht vollständig gelöst sondern nur teilweise, wodurch der feste Sitz des Zahnkranzes 7 erhalten bleibt und die Gleiskette 2 nicht entspannt werden muss. Die Sicherungsscheibe wird dann auf dem Zahnkranz 7 gesetzt und mit dem Zahnkranz 7 und neuen verlängerten Schrauben wieder vollständig an den Antrieb 3 montiert. Dieses gilt sinngemäß für beide Antriebsseiten.

Die Erfindung ist nicht auf das vorstehend beschriebene Ausführungsbeispiel beschränkt. So kann das erfindungsgemäße Kettenlaufwerk auch bei zivilen Kettenfahrzeugen eingesetzt werden.

### Bezugszeichenliste

- 1: Kettenlaufwerk
- 2: Gleiskette
- 3: Antriebsrad
- 4: Laufrad
- 5: Kettenglied
- 6: Endverbinder
- 7: (äußere) Zahnkranz
- 8: Sicherungsscheibe
- 9: Vorsprung
- 10: Gummipolster
- 11: Ausnehmung
- 12: zentrale Ausnehmung
- 13: Langloch

## Patentansprüche

1. Kettenlaufwerk (1) für Kettenfahrzeuge
• mit einer Gleiskette (2), die aus einer Vielzahl von modularen Kettengliedern (5) besteht, die über Endverbinder (6) miteinander verbunden sind, wobei die Kettenglieder (5) Gummipolster (10) umfassen,
• mit einem Antriebsrad (3), welches mindestens einen in die Gleiskette (2) eingreifenden, der Außenseite des Fahrzeuges zugewandten Zahnkranz (7) umfasst, und
• mit einer an dem Zahnkranz (7) befestigten Sicherungsscheibe (8) zur Vermeidung eines Abwerfens der Gleiskette (2), **dadurch gekennzeichnet, dass**
• die Sicherungsscheibe (8)
∘ außenseitig an dem Zahnkranz (7) befestigt ist und
∘ einen Außendurchmesser aufweist, der mindestens dem maximalen Außendurchmesser des Zahnkranzes (7) entspricht und
• die Endverbinder an der Sicherungsscheibe (8) anliegen und
• der äußere Umfang der Sicherungsscheibe (8) mäanderförmig ausgebildet ist, derart, dass Vorsprünge (9) die seitlich benachbarte Gummipolster (10) der Kettenglieder (5) und nutenförmige Ausnehmungen (11) die Bereiche der Endverbinder (6) seitlich teilweise abdecken.

2. Kettenlaufwerk nach Anspruch 1, **dadurch gekennzeichnet, dass** der Außendurchmesser der Sicherungsscheibe (8) derart gewählt ist, dass die Kettenglieder (5), die sich oberhalb des Zahnkranzes (7) befinden, seitlich fast vollständig von der Sicherungsscheibe (8) abgedeckt werden.

3. Kettenlaufwerk nach einem der Ansprüche 1 oder 2, **dadurch gekennzeichnet, dass** die Sicherungsscheibe (8) ringförmig ausgebildet ist.

4. Kettenlaufwerk nach einem der Ansprüche 1 bis 3, **dadurch gekennzeichnet, dass** die Sicherungsscheibe (8) gleichmäßig über den Umfang verteilt angeordnete Langlöcher (13) aufweist.

5. Kettenfahrzeug mit einem Kettenlaufwerk (1) nach einem der Ansprüche 1 bis 4.

6. Kettenfahrzeug nach Anspruch 5, **dadurch gekennzeichnet, dass** das Kettenfahrzeug ein militärisches Kettenfahrzeug ist.

7. Kettenfahrzeug nach Anspruch 6, **dadurch gekennzeichnet, dass** das Kettenfahrzeug ein ziviles Kettenfahrzeug ist.

## Claims

1. Tracked chassis (1) for tracked vehicles
• having a track chain (2) which consists of a multiplicity of modular chain links (5) which are connected to one another via end connectors (6), the chain links (5) comprising rubber pads (10),
• having a drive wheel (3) which comprises at least one sprocket (7) which engages into the track chain (2) and faces the outer side of the vehicle, and
• having a safety plate (8) which is fastened to the sprocket (7) in order to avoid the track chain (2) being thrown off, **characterized in that**
• the safety plate (8)
∘ is fastened to the outer side of the sprocket (7), and
∘ has an external diameter which corresponds at least to the maximum external diameter of the sprocket (7), and
• the end connectors (6) bear against the safety plate (8), and
• the outer circumference of the safety plate (8) is of meandering configuration, in such a way that projections (9) laterally partially cover the laterally adjacent rubber pads (10) of the chain links (5) and groove-shaped recesses (11) laterally partially cover the regions of the end connectors (6).

2. Tracked chassis according to Claim 1, **characterized in that** the external diameter of the safety plate (8) is selected in such a way that the chain links (5) which are situated above the sprocket (7) are covered laterally almost completely by the safety plate (8).

3. Tracked chassis according to either of Claims 1 and 2, **characterized in that** the safety plate (8) is of annular configuration.

4. Tracked chassis according to one of Claims 1 to 3, **characterized in that** the safety plate (8) has slots (13) which are arranged distributed uniformly over the circumference.

5. Tracked vehicle having a tracked chassis (1) according to one of Claims 1 to 4.

6. Tracked vehicle according to Claim 5, **characterized in that** the tracked vehicle is a military tracked vehicle.

7. Tracked vehicle according to Claim 6, **characterized in that** the tracked vehicle is a civilian tracked vehicle.

## Revendications

1. Train de roulement à chenilles (1) pour véhicules à chenilles,
• comprenant une chenille (2) qui se compose d'une pluralité de patins (5) modulaires reliés les uns aux autres par le biais d'attaches d'extrémité (6), les patins (5) comprenant des tampons en caoutchouc (10),
• comprenant une roue d'entraînement (3) qui comprend au moins une couronne dentée (7) faisant face au côté extérieur du véhicule et s'engrenant dans la chenille (2), et
• comprenant une plaque de sécurité (8) fixée à la couronne dentée (7) pour éviter une éjection de la chenille (2), **caractérisé en ce que**
• la plaque de sécurité (8)
∘ est fixée du côté extérieur sur la couronne dentée (7) et
∘ possède un diamètre extérieur qui correspond au moins au diamètre extérieur maximal de la couronne dentée (7) et
• les attaches d'extrémité reposent contre la plaque de sécurité (8) et
• le pourtour extérieur de la plaque de sécurité (8) est réalisée en forme de méandre de telle sorte que des parties en saillie (9) recouvrent les tampons en caoutchouc (10) latéralement voisins des patins (5) et des cavités (11) en forme de rainures recouvrent partiellement latéralement les zones des attaches d'extrémité (6).

2. Train de roulement à chenilles selon la revendication 1, **caractérisé en ce que** le diamètre extérieur de la plaque de sécurité (8) est choisi de telle sorte que les patins (5) qui se trouvent au-dessus de la couronne dentée (7) sont presque entièrement recouverts latéralement par la plaque de sécurité (8).

3. Train de roulement à chenilles selon l'une des revendications 1 ou 2, **caractérisé en ce que** la plaque de sécurité (8) est réalisée en forme d'anneau.

4. Train de roulement à chenilles selon l'une des revendications 1 à 3, **caractérisé en ce que** la plaque de sécurité (8) possède des trous oblongs (13) distribués régulièrement sur le pourtour.

5. Véhicule à chenilles équipé d'un train de roulement à chenilles (1) selon l'une des revendications 1 à 4.

6. Véhicule à chenilles selon la revendication 5, **caractérisé en ce que** le véhicule à chenilles est un véhicule à chenilles militaire.

7. Véhicule à chenilles selon la revendication 6, **caractérisé en ce que** le véhicule à chenilles est un véhicule à chenilles civile.
